(19) Europäisches Patentamt
European Patent Office
Office européen des brevets

(11) **EP 3 598 631 B1**

(12) **EUROPÄISCHE PATENTSCHRIFT**

(45) Veröffentlichungstag und Bekanntmachung des Hinweises auf die Patenterteilung:
**10.08.2022  Patentblatt 2022/32**

(21) Anmeldenummer: **19182391.3**

(22) Anmeldetag: **25.06.2019**

(51) Internationale Patentklassifikation (IPC):
**H02P 6/15** *(2016.01)*    **H02P 21/00** *(2016.01)*

(52) Gemeinsame Patentklassifikation (CPC):
**H02P 6/15; H02P 21/0025; H02P 2207/05**

(54) **VERFAHREN ZUM BETRIEB EINER ELEKTRISCH KOMMUTIERTEN MASCHINE UND ELEKTRISCH KOMMUTIERTE MASCHINE**

METHOD FOR OPERATING AN ELECTRICALLY COMMUTATED MACHINE AND ELECTRICALLY COMMUTATED MACHINE

PROCÉDÉ DE FONCTIONNEMENT D'UNE MACHINE À COMMUTATION ÉLECTRIQUE ET MACHINE À COMMUTATION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2018   DE 102018211771**

(43) Veröffentlichungstag der Anmeldung:
**22.01.2020   Patentblatt 2020/04**

(73) Patentinhaber: **Robert Bosch GmbH
70442 Stuttgart (DE)**

(72) Erfinder:
• **Rehagen, Johannes**
  **76199 Karlsruhe (DE)**
• **Jerger, Armin**
  **76547 Sinzheim (DE)**
• **Malich, Thomas**
  **77876 Kappelrodeck (DE)**
• **Fricker, David**
  **67240 Oberhoffen Sur Moder (FR)**
• **Soellner, Michael**
  **77839 Lichtenau (DE)**
• **Vollmer, Ulrich**
  **73235 Weilheim (DE)**
• **Mueller, Tankred**
  **22303 Hamburg (DE)**
• **Denz, Dominik**
  **77815 Buehl (DE)**

(56) Entgegenhaltungen:
**DE-A1-102011 080 941     DE-A1-102015 213 565
US-A1- 2010 213 883**

• **PETER BOBER: "Measurement of Objective Function for BLDC Motor Optimization", ACTA ELECTROTECHNICA ET INFORMATICA, Bd. 17, Nr. 4, 1. Dezember 2017 (2017-12-01), Seiten 43-49, XP055638143, SK ISSN: 1335-8243, DOI: 10.15546/aeei-2017-0033**
• **LELKES A ET AL: "BLDC motor for fan application with automatically optimized commutation angle", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, Bd. 3, 20. Juni 2004 (2004-06-20), Seiten 2277-2281, XP010739629, DOI: 10.1109/PESC.2004.1355476 ISBN: 978-0-7803-8399-9**

**Beschreibung**

Stand der Technik

Es ist bereits ein Verfahren zum Betrieb einer elektrisch kommutierten Maschine vorgeschlagen worden, bei dem eine Phasenverschiebung einer an einem Stator der elektrisch kommutierten Maschine angelegten Spannung zu einer durch einen Rotor der elektrisch kommutierten Maschine induzierten Spannung als Vorkommutierungswinkel der elektrisch kommutierten Maschine abhängig von einer Drehzahl der elektrisch kommutierten Maschine eingestellt wird. DE102015 213565 A1 offenbart eine Steuereinheit die eingerichtet ist einen Vorkommutierungswinkel zur Maximierung des Wirkungsgrads anzupassen.

Offenbarung der Erfindung

Die Erfindung geht aus von einem Verfahren zum Betrieb einer elektrisch kommutierten Maschine nach Anspruch 1 und eine elektrisch kommutierte Maschine nach Anspruch 8.

Es wird vorgeschlagen, dass in zumindest einem Verfahrensschritt, insbesondere in zumindest einem Verfahrensschritt eines Übermodulationsbetriebs der elektrisch kommutierten Maschine, ein Vorkommutierungswinkel der elektrisch kommutierten Maschine in Abhängigkeit von einem Wirkungsgrad der elektrisch kommutierten Maschine eingestellt wird. Vorzugsweise umfasst das Verfahren zumindest einen Motorbetrieb. Insbesondere ist die elektrisch kommutierte Maschine, insbesondere in dem Motorbetrieb, dazu vorgesehen, elektrische Energie in mechanische Energie umzusetzen. Alternativ oder zusätzlich umfasst das Verfahren einen Generatorbetrieb. Insbesondere ist die elektrisch kommutierte Maschine, insbesondere in dem Generatorbetrieb, dazu vorgesehen, mechanische Energie in elektrische Energie umzusetzen. Unter "vorgesehen" soll insbesondere speziell eingerichtet, speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Vorzugsweise umfasst die elektrisch kommutierte Maschine zumindest einen Stator. Vorzugsweise wird in zumindest einem Verfahrensschritt, insbesondere mittels des Stators, ein Magnetfeld erzeugt. Vorzugsweise wird das Magnetfeld mit zumindest einem induktiven Bauelement des Stators erzeugt. Vorzugsweise umfasst das Verfahren in zumindest einem Verfahrensschritt ein elektrisches Kommutieren eines Stromflusses zur Erzeugung des Magnetfeldes durch den Stator, insbesondere durch das induktive Bauelement. Vorzugsweise wird bei dem elektrischen Kommutieren eine Richtung des Stromflusses zur Erzeugung des Magnetfeldes zyklisch geändert. Es ist auch denkbar, dass, insbesondere zusätzlich, eine Amplitude des Stromflusses geändert wird. Beispielsweise kann eine Signalform des Stromflusses zumindest im Wesentlichen rechteckig, trapezförmig, dreieckig, sinusförmig o. dgl. sein. Vorzugsweise wird beim elektrischen Kommutieren der Stromfluss zwischen zumindest zwei, besonders bevorzugt zumindest drei, induktiven Bauelement hin- und hergeschalten.

Vorzugsweise umfasst die elektrisch kommutierte Maschine zumindest einen Rotor. Vorzugsweise weist der Rotor in zumindest einem Verfahrensschritt, besonders bevorzugt dauerhaft, ein magnetisches Moment auf. Beispielsweise wird das magnetische Moment mittels eines Permanentmagneten erzeugt. Es ist aber auch denkbar, dass das magnetische Moment mittels eines Elektromagneten erzeugt wird. Vorzugsweise wird der Rotor in zumindest einem Verfahrensschritt, insbesondere durch eine Kopplung des Magnetfelds an das magnetische Moment, zu einer Bewegung, insbesondere einer Rotationsbewegung, angetrieben. Vorzugweise ist der Rotor dazu vorgesehen, über zumindest eine Rotorwelle des Rotors ein erzeugtes Drehmoment auf eine Arbeitsmaschine zu übertragen. Vorzugsweise wird eine Drehzahl des Rotors durch eine Änderungsfrequenz des elektrischen Kommutieren, und insbesondere durch die Anzahl der induktiven Bauelemente, vorgegeben.

Vorzugsweise wird in zumindest einem Verfahrensschritt ein Vorkommutierungswinkel des elektrischen Kommutierens eingestellt. Insbesondere wird in zumindest einem Verfahrensschritt eine Ausrichtung und/oder Drehzahl des Rotors erfasst, ermittelt und/oder geschätzt, insbesondere mittels einer Steuer- oder Regeleinheit der elektrisch kommutierten Maschine. Insbesondere wird in zumindest einem Verfahrensschritt eine Richtung des Magnetfeldes durch das elektrische Kommutieren des Stromflusses an eine Ausrichtung des Rotors angepasst. Insbesondere wird das Magnetfeld durch das elektrische Kommutieren um eine Drehachse des Rotors gedreht. Eine Drehung des Magnetfelds kann kontinuierlich oder in diskreten Schritten erfolgen. Vorzugsweise eilt das Magnetfeld dem Rotor in Bewegungsrichtung des Rotors mit dem Vorkommutierungswinkel, insbesondere um weniger als 90°, voraus. Vorzugsweise wird die Ausrichtung des Magnetfeldes mit der Ausrichtung des Rotors in zumindest einem Verfahrensschritt zumindest im Wesentlichen phasenstarr gehalten. Unter "im Wesentlichen phasenstarr" soll insbesondere verstanden werden, dass der Vorkommutierungswinkel, insbesondere bei einem stabilen Betriebszustand der elektrisch kommutierten Maschine, um weniger als 30 °, bevorzugt um weniger als 15 °, besonders bevorzugt um weniger als 5 °, um einen zeitlichen Mittelwert des Vorkommutierungswinkel schwankt. Vorzugsweise wird der Vorkommutierungswinkel für verschiedene Betriebszustände der elektrisch kommutierten Maschine auf unterschiedliche Werte eingestellt. Insbesondere unterscheiden sich Betriebszustände der elektrisch kommutierten Maschine durch die Drehzahl des Rotors und/oder durch das an dem Rotor, insbesondere der Rotorwelle, abgreifbare Drehmoment.

Vorzugsweise wird, insbesondere von der Steuer- oder Regeleinheit der elektrisch kommutierten Maschine, in zumindest einem Verfahrensschritt ein Sollwert für den Vorkommutierungswinkel, insbesondere anhand von in einer Speichereinheit der elektrisch kommutierten Maschine hinterlegten Vergleichswerten und/oder Zuordnungsvorschriften, gewählt und/oder ermittelt. Vorzugsweise wird, insbesondere von der Steuer- oder Regeleinheit der elektrisch kommutierten Maschine, der Sollwert für den Vorkommutierungswinkel in Abhängigkeit von dem aktuellen Betriebszustand und/oder einem Sollbetriebszustand der elektrisch kommutierten Maschine gewählt und/oder ermittelt. Vorzugsweise wird, insbesondere von der Steuer- oder Regeleinheit der elektrisch kommutierten Maschine, der Sollwert für den Vorkommutierungswinkel in Abhängigkeit von einem Wirkungsgrad der elektrisch kommutierten Maschine gewählt und/oder ermittelt.

Vorzugsweise soll unter dem "Wirkungsgrad" ein Verhältnis einer durch die elektrisch kommutierte Maschine bereitgestellten mechanischen Leistung zu einer von der elektrisch kommutierten Maschine aufgenommenen elektrischen Leistung verstanden werden. Insbesondere ist der Wirkungsgrad zumindest proportional zu dem von dem Rotor, insbesondere der Rotorwelle, übertragenen Drehmoment. Insbesondere ist der Wirkungsgrad zumindest proportional zu der Drehzahl des Rotors. Insbesondere ist der Wirkungsgrad zumindest entgegengesetzt proportional zu einer aufgenommenen elektrischen Leistung durch die elektrisch kommutierte Maschine, insbesondere zu dem Stromfluss durch den Stator. Insbesondere wird zumindest in einem Verfahrensschritt einer Vorbereitungsphase zumindest einem Betriebszustand ein Sollwert des Vorkommutierungswinkels, insbesondere von einer externen Recheneinheit, zugeordnet. Insbesondere ist die externe Recheneinheit dazu vorgesehen, ein mathematisches Modell der elektrisch kommutierten Maschine zu erstellen und/oder zu verarbeiten. Vorzugsweise soll unter "extern" von der elektrisch kommutierten Maschine unabhängig ausgebildet und/oder betreibbar verstanden werden. In einer alternativen Ausgestaltung ist es auch denkbar, dass die externe Recheneinheit und die Steuer- oder Regeleinheit der elektrisch kommutierten Maschine ineinander integriert sind oder dass die Steuer- oder Regeleinheit der elektrisch kommutierten Maschine zumindest einem Betriebszustand ein Sollwert des Vorkommutierungswinkels zuordnet. Insbesondere wird zumindest in einem Verfahrensschritt einer Vorbereitungsphase, insbesondere von der externen Recheneinheit, mehreren Betriebszuständen je ein Sollwert des Vorkommutierungswinkels zugeordnet. Insbesondere erfolgt zumindest in einem Verfahrensschritt einer Vorbereitungsphase eine Zuordnung, insbesondere durch die externe Recheneinheit, eines Sollwerts des Vorkommutierungswinkels zu einem Betriebszustand anhand des betriebszustandsabhängigen Wirkungsgrades. Beispielsweise wird, insbesondere durch die externe Recheneinheit, einem Betriebszustand ein Sollwert des Vorkommutierungswinkels zugeordnet, der den betriebszustandsabhängig höchsten Wirkungsgrad aufweist. Beispielsweise wird, insbesondere durch die externe Recheneinheit, mehreren Betriebszuständen je ein Sollwert des Vorkommutierungswinkels zugeordnet, der für diese Betriebszustände denselben Wirkungsgrad erzielt. Vorzugsweise wird, insbesondere durch die externe Recheneinheit, eine Zuordnung in der Speichereinheit der elektrisch kommutierten Maschine hinterlegt. Vorzugsweise wird in zumindest einem Verfahrensschritt der in Abhängigkeit von dem Wirkungsgrad zugeordnete Sollwert für den Vorkommutierungswinkel, insbesondere von der Steuer- oder Regeleinheit der elektrisch kommutierten Maschine, abgerufen. Vorzugsweise wird in zumindest einem Verfahrensschritt der in Abhängigkeit von dem Wirkungsgrad zugeordnete Sollwert für den Vorkommutierungswinkel zu einer Steuerung oder Regelung des Vorkommutierungswinkels, insbesondere von der Steuer- oder Regeleinheit der elektrisch kommutierten Maschine, ausgewertet. Durch die erfindungsgemäße Ausgestaltung des Verfahrens kann eine elektrisch kommutierte Maschine mit einem vorteilhaft einstellbaren Wirkungsgrad betrieben werden. Insbesondere kann die elektrisch kommutierte Maschine vorteilhaft effizient betrieben werden. Alternativ oder zusätzlich kann die elektrisch kommutierte Maschine, insbesondere durch einen konstant gehaltenen Wirkungsgrad, mit einem vorteilhaft linearen Zusammenhang zwischen mechanischer Leistung und elektrischer Leistung betrieben werden.

Weiter wird vorgeschlagen, dass in zumindest einem Verfahrensschritt, insbesondere in zumindest einem Verfahrensschritt eines Übermodulationsbetriebs der elektrisch kommutierten Maschine, zumindest ein Kommutierungssignal der elektrisch kommutierten Maschine übermoduliert wird. Insbesondere ist das Kommutierungssignal als der Stromfluss durch den Stator und/oder als ein dem Stromfluss entsprechender Spannungsabfall an dem Stator ausgebildet. Vorzugsweise wird das Kommutierungssignal von einer Schalteinheit, insbesondere einer Transistoreinheit, der elektrisch kommutierten Maschine erzeugt. Vorzugsweise wird das Kommutierungssignal in zumindest einem Verfahrensschritt, insbesondere von der Steuer- oder Regeleinheit der elektrisch kommutierten Maschine, mit einer Pulsweitenmodulation versehen. Vorzugsweise umfasst das Verfahren zumindest einen Regulärbetrieb. Insbesondere wird in dem Regulärbetrieb eine größte Amplitude des Stromflusses verwendet, die kleiner ist als eine durch eine Stromversorgung und/oder durch ein Bauteil der elektrisch kommutierten Maschine vorgegebene Stromgrenze. Insbesondere wird in dem Regulärbetrieb eine größte Amplitude eines des Stromflusses entsprechenden Spannungsabfalls verwendet, die kleiner ist als eine durch eine Spannungsversorgung, durch ein Bauteil und/oder durch ein Betriebsparameter der elektrisch kommutierten Maschine vorgegebene Spannungsgrenze. Vorzugsweise wird zumindest in dem Regulärbetrieb, insbesondere von der Steuer- oder Regeleinheit der elektrisch kommutierten Maschine, der Vorkommutierungswinkel in Abhängigkeit von dem Wirkungsgrad eingestellt. Vorzugsweise wird in dem Übermodulationsbetrieb ein Sollwert für die größte Amplitude des Stromflusses über der Stromgrenze oder ein Sollwert für die größte Amplitude des Spannungsabfalls über der Spannungsgrenze vorgegeben. Vorzugsweise wird das Kommutierungssignal bei einem Übertritt, insbesondere aus dem Regulärbetrieb, in den Übermodulationsbetrieb an der Spannungsgrenze oder der Stromgrenze abgeschnitten. Insbesondere wird in dem Übermodulationsbetrieb, insbesondere von der Steuer- oder Regeleinheit der elektrisch kommutierten Maschine, ein Effektivwert eines Spannungsabfalls und/oder des Stromflusses gegenüber dem Regulärbetrieb erhöht. Beispielsweise wird ein Effektivwert eines im Regulärbetrieb sinusförmigen Spannungsabfalls auf einen Wert größer als einen $1/\sqrt{2}$-Anteil der Spannungsgrenze eingestellt. Vorzugsweise wird zumindest in dem Übermodulationsbetrieb der Vorkommutierungswinkel in Abhängigkeit von dem Wirkungsgrad eingestellt. Durch die erfindungsgemäße Ausgestaltung können Schaltverluste, die insbesondere aufgrund der Pulsweitenmodulation in dem Regulärbetrieb auftreten, vorteilhaft gering gehalten werden. Insbesondere kann eine Welligkeit eines Stromflusses durch eine Entkopplungseinheit, insbesondere eine Zwischenkreis-Kondensatoreinheit, der elektrisch kommutierten Einheit vorteilhaft gering gehalten werden.

Ferner wird vorgeschlagen, dass in zumindest einem Verfahrensschritt, insbesondere in zumindest einem Verfahrensschritt eines Übermodulationsbetriebs der elektrisch kommutierten Maschine, der Vorkommutierungswinkel anhand zumindest einer kontinuierlichen Stromkennlinie der elektrisch kommutierten Maschine eingestellt wird. Vorzugsweise wird in zumindest einem Verfahrensschritt, insbesondere in zumindest einem Verfahrensschritt des Regulärbetriebs der elektrisch kommutierten Maschine, der Vorkommutierungswinkel anhand der kontinuierlichen Stromkennlinie der elektrisch kommutierten Maschine eingestellt. Vorzugsweise wird in zumindest einem Verfahrensschritt, insbesondere in zumindest einem Verfahrensschritt mit einem unterhalb der Spannungsgrenze liegenden Sollwert für die größte Amplitude des Spannungsabfalls, der Vorkommutierungswinkel anhand der kontinuierlichen Stromkennlinie der elektrisch kommutierten Maschine eingestellt. Vorzugsweise wird der Vorkommutierungswinkel, insbesondere von der Steuer- oder Regeleinheit der elektrisch kommutierten Maschine, über ein Verhältnis von Teilströmen des Stromflusses eingestellt. Vorzugsweise wird der Stromfluss in zumindest einem Verfahrensschritt in einem mit dem Rotor drehfest verbundenen Rotorkoordinatensystem dargestellt. Insbesondere umfasst der Stromfluss relativ zu dem Rotor einen als Querstrom darstellbaren Teilstrom. Insbesondere umfasst der Stromfluss relativ zu dem Rotor einen als Längsstrom darstellbaren Teilstrom. Vorzugsweise ist der Längsstrom zumindest im Wesentlichen senkrecht zu dem Querstrom ausgebildet. Vorzugsweise ist der Längsstrom zumindest im Wesentlichen parallel zu dem magnetischen Moment ausgebildet. Vorzugsweise ist der Querstrom zumindest im Wesentlichen senkrecht zu dem magnetischen Moment ausgebildet. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise wird, insbesondere von der Steuer- oder Regeleinheit der elektrisch kommutierten Maschine, der Vorkommutierungswinkel über ein Verhältnis des Längsstroms zu dem Querstrom eingestellt. Vorzugsweise wird in zumindest einem Verfahrensschritt zu zumindest einem Betriebszustand ein Verhältnis von Längsstrom zu Querstrom ermittelt, das einen einstellbaren Wirkungsgrad erzielt. Vorzugsweise wird in zumindest einem Verfahrensschritt zu einer Vielzahl an Betriebszuständen je ein Verhältnis von Längsstrom zu Querstrom ermittelt, das einen einstellbaren Wirkungsgrad erzielt. Vorzugsweise wird in zumindest einem Verfahrensschritt die Stromkennlinie, insbesondere mittels der exteren Recheneinheit, insbesondere werksseitig, bestimmt. Insbesondere ordnet die Stromkennlinie, insbesondere unterhalb der Stromgrenze, je einen Wert des Querstroms und je einen Wert des Längsstroms einander zu. Vorzugsweise wird die Stromkennlinie in zumindest einem Verfahrensschritt in der Speichereinheit hinterlegt. Insbesondere werden/wird in zumindest einem Verfahrensschritt ein Gesamtbetrag des Stromflusses und/oder ein Betrag des Querstroms durch den Betriebszustand, insbesondere durch das zu liefernde Drehmoment, festgelegt. Vorzugsweise wird in zumindest einem Verfahrensschritt eine Aufteilung des Stromflusses auf die Teilströme, insbesondere auf den Querstrom und den Längsstrom, anhand der Stromkennlinie ermittelt. Vorzugsweise werden die ermittelte Aufteilung des Stromflusses als Sollwerte für eine Stromregelung des Querstroms und/oder eine Stromregelung des Längsstroms verwendet. Durch die erfindungsgemäße Ausgestaltung kann ein Sollwert für den Vorkommutierungswinkel vorteilhaft einfach ermittelt werden. Insbesondere kann der Vorkommutierungswinkel vorteilhaft betriebszustandsabhängig eingestellt werden. Insbesondere kann zu einem Betriebszustand ein Vorkommutierungswinkel mit einem definierten Wirkungsgrad eingestellt werden.

Des Weiteren wird vorgeschlagen, dass in zumindest einem Verfahrensschritt zumindest eine Stromkennlinie der elektrisch kommutierten Maschine zur Einstellung des Vorkommutierungswinkels bei zumindest einer Betriebstemperatur der elektrisch kommutierten Maschine ermittelt wird, insbesondere mittels der externen Recheneinheit. Vorzugsweise wird genau eine Stromkennlinie ermittelt. Es ist aber auch denkbar, dass eine Stromkennlinienschar und/oder ein Stromkennlinienfeld ermittelt werden/wird, insbesondere mit einem Betriebsparameter der elektrisch kommutierten Maschine als Freiheitsgrad. Vorzugsweise wird die zumindest eine Stromkennlinie anhand von Maschinenparametern der elektrisch kommutierten Maschine ermittelt, insbesondere berechnet und/oder simuliert. Unter einem "Maschinenparameter" soll insbesondere eine Größe oder Kennziffer verstanden werden, die sich durch den Aufbau und/oder den verwendeten Bauteilen der elektrisch kommutierten Maschine ergeben. Vorzugsweise variiert ein Maschinenparameter bei verschiedenen Betriebszuständen um weniger als 200 %, vorzugsweise um weniger als 100 %, besonders bevorzugt um weniger als 50 %. Es ist insbesondere vorstellbar, dass ein Wert des Maschinenparameters abhängig von einer Temperatur der elektrisch kommutierten Maschine variiert. Beispielsweise ist der Maschinenparameter als Induktivität des induktiven Bauelements ausgebildet. Beispielsweise ist der Maschinenparameter als elektrischer Widerstand des induktiven Bauelements ausgebildet. Beispielsweise ist der Maschinenparameter als eine mit dem induktiven Bauteil erreichbare Flussverkettung, insbesondere als Flussverkettung pro Einheit des Stromflusses, ausgebildet. Beispielsweise ist der Maschinenparameter als Stärke des magnetischen Moments ausgebildet. Beispielsweise ist der Maschinenparameter als Reluktanzmoment ausgebildet. Vorzugsweise wird die Stromkennlinie mit einem Wert des Maschinenparameters ermittelt, welcher sich bei der Betriebstemperatur der elektrisch kommutierten Maschine ergibt. Insbesondere wird in zumindest einem Verfahrensschritt der Maschinenparameter bei der Betriebstemperatur erfasst und/oder mit einem temperaturabhängigen Korrekturwert beaufschlagt. Vorzugsweise ergibt sich die Betriebstemperatur aus einer Eigenerwärmung aufgrund des Betriebes der elektrisch kommutierten Maschine und/oder aus einer an sich bekannten Umgebungstemperatur eines vorgesehenen Einsatzorts der elektrisch kommutierten Maschine, beispielsweise einem Fahrzeugmotorraum. Es ist denkbar, dass weitere Kennlinien für weitere Temperaturwerte der elektrisch kommutierten Maschine erfasst werden. Es ist auch denkbar, dass bei einer Ermittlung der Stromkennlinie ein Einfluss zumindest eines weiteren Betriebsparameters, beispielsweise ein Einfluss eines Betriebs bei einer Nenndrehzahl der elektrisch kommutierten Maschine, auf die Stromkennlinie berücksichtigt wird. Durch die erfindungsgemäße Ausgestaltung kann die Stromkennlinie vorteilhaft genau auf einen Betrieb der elektrisch kommutierten Maschine abgestimmt werden.

Darüber hinaus wird vorgeschlagen, dass in zumindest einem Verfahrensschritt, insbesondere in zumindest einem Verfahrensschritt eines Übermodulationsbetriebs der elektrisch kommutierten Maschine, der Vorkommutierungswinkel auf einen Wert eingestellt wird, der bei einem gegebenen Betriebszustand einen höchsten Wirkungsgrad erzielt. Vorzugsweise wird, insbesondere durch die Steuer- oder Regeleinheit, ein Betriebszustand vorgegeben, insbesondere aufgrund einer Drehzahlregelung und/oder Drehmomentregelung. Vorzugsweise wird zu dem gegebenem Betriebszustand ein Vorkommutierungswinkel, insbesondere ein Verhältnis der Teilströme des Stromflusses, aus der Speichereinheit abgerufen. Vorzugsweise wird in zumindest einem Verfahrensschritt, insbesondere von der Steuer- oder Regeleinheit der elektrisch kommutierten Maschine, ein Wert für den Vorkommutierungswinkel ermittelt, der für den gegebenen Betriebszustand einen höchsten Wert für den Wirkungsgrad erzielt. Insbesondere wird für zumindest einen weiteren Betriebszustand zumindest ein weiterer Wert für den Vorkommutierungswinkel ermittelt, der für den weiteren Betriebszustand einen weiteren höchsten Wert für den Wirkungsgrad erzielt. Es ist denkbar, dass der höchste Wert für den Wirkungsgrad für den Betriebszustand und der weitere höchste Wert für den Wirkungsgrad für den weiteren Betriebszustand voneinander abweichen. Vorzugsweise wird in zumindest einem Verfahrensschritt zu dem gegebenen Betriebszustand ein Wert des Vorkommutierungswinkels ermittelt, der ein größtes Drehmoment pro Betrag des Stromflusses erzielt. Vorzugsweise besteht die Stromkennlinie aus Punkten, die für verschiedene Betriebszustände das jeweils größte Drehmoment pro Betrag des Stromflusses erzielen. Durch die erfindungsgemäße Ausgestaltung kann die elektrisch kommutierte Maschine vorteilhaft effizient betrieben werden. Insbesondere kann eine Verlustleistung vorteilhaft gering gehalten werden. Insbesondere kann eine Erwärmung der kommutierten Maschine aufgrund der Verlustleistung vorteilhaft gering gehalten werden. Insbesondere kann eine, insbesondere durch die Verlustleistung beschränkte, vorteilhaft hohe elektromagnetische Verträglichkeit der elektrisch kommutierten Maschine erreicht werden.

Weiterhin wird vorgeschlagen, dass in zumindest einem Verfahrensschritt, insbesondere in einem Verfahrensschritt eines Feldschwächungsbetriebs der elektrisch kommutierten Maschine, ein wirkungsgradabhängiges Einstellen des Vorkommutierungswinkels deaktiviert wird. Vorzugsweise wird in zumindest einem Verfahrensschritt, insbesondere in zumindest einem Verfahrensschritt des Feldschwächungsbetriebs der elektrisch kommutierten Maschine, der Vorkommutierungswinkel, insbesondere zur Erreichung eines stabilen Arbeitspunktes der unter Last stehenden elektrisch kommutierten Maschine, abweichend von der kontinuierlichen Stromkennlinie eingestellt. Insbesondere wird der Vorkommutierungswinkel, insbesondere zur Erreichung eines stabilen Arbeitspunktes der unter Last stehenden elektrisch kommutierten Maschine, bei einem Überschreiten der Spannungsgrenze durch den Sollwert für die größte Amplitude des Spannungsabfalls abweichend von der kontinuierlichen Stromkennlinie eingestellt. Insbesondere wird in dem Feldschwächungsbetrieb von der Steuer- oder Regeleinheit der elektrisch kommutierten Maschine ein betragsmäßig höherer Längsstrom eingestellt als er durch die Stromkennlinie vorgegeben ist. Vorzugsweise wird der Längsstrom in dem Feldschwächungsbetrieb von einer Steuerung oder Regelung der Drehzahl des Rotors vorgegeben. Insbesondere wird der Längsstrom in dem Feldschwächungsbetrieb unabhängig von dem Querstrom gesteuert oder geregelt. Vorzugsweise wird in dem Feldschwächungsbetrieb, insbesondere von der Steuer- oder Regeleinheit, der Vorkommutierungswinkel eingestellt, der unter Einbehaltung der Spannungsgrenze das höchste Drehmoment und/oder den höchsten Wirkungsgrad erzielt. Vorzugsweise wird in dem Feldschwächungsbetrieb das Kommutierungssignal der elektrisch kommutierten Maschine übermoduliert. Vorzugsweise wird in zumindest einem Verfahrensschritt bei einem Verlassen des Feldschwächungsbetriebs das wirkungsgradabhängige Einstellen des Vorkommutierungswinkels aktiviert. Durch die erfindungsgemäße Ausgestaltung kann ein vorteilhaft flexibler Betrieb der elektrisch kommutierten Maschine erreicht werden. Insbesondere kann ein vorteilhaft hoher Drehzahlbereich durch die elektrisch kommutierte Maschine abgedeckt werden.

Weiter wird vorgeschlagen, dass in zumindest einem Verfahrensschritt ein Startpunkt einer Abweichung von einer Stromkennlinie der elektrisch kommutierten Maschine zur Einstellung des Vorkommutierungswinkels abhängig von zumindest einem Betriebsparameter der elektrisch kommutierten Maschine bestimmt wird. Insbesondere wird in zumindest einem Verfahrensschritt als Startpunkt ein Schnittpunkt der, insbesondere betriebsparameterabhängigen, Spannungsgrenze mit der Stromkennlinie gewählt. Vorzugsweise wird in zumindest einem Verfahrensschritt die Spannungsgrenze ermittelt. Vorzugsweise wird die Spannungsgrenze in Abhängigkeit von zumindest einem Betriebsparameter ermittelt. Vorzugsweise wird die Spannungsgrenze in Abhängigkeit von der Drehzahl ermittelt. Vorzugsweise wird die Spannungsgrenze, insbesondere bei einer gegebenen Drehzahl, in Abhängigkeit von der Betriebstemperatur ermittelt. Vorzugsweise wird zu einer Ermittlung der Spannungsgrenze der Stromfluss, insbesondere eine Differenz des Stromflusses zu einem Sollwert, erfasst. Durch die erfindungsgemäße Ausgestaltung kann vorteilhaft ein Ausweichbereich bei einer fallenden Spannungsgrenze realisiert werden. Insbesondere kann die elektrisch kommutierte Maschine trotz fallender Spannungsgrenze, beispielsweise aufgrund einer zunehmenden Betriebstemperatur, vorteilhaft kontinuierlich betrieben werden.

Ferner wird vorgeschlagen, dass das Verfahren zumindest einen Kompensationsschritt zu einer Anpassung des Vorkommutierungswinkels an einen Umgebungsparameter aufweist. Vorzugsweise wird in zumindest einem Verfahrensschritt ein Umgebungsparameter, insbesondere mittels eines Umgebungssensorelements der elektrisch kommutierten Maschine, erfasst und/oder, insbesondere anhand von umgebungsparameterabhängigen Betriebsparametern durch die Steuer- oder Regeleinheit, ermittelt. Alternativ oder zusätzlich umfasst die elektrisch kommutierte Maschine zumindest ein Eingabeelement, insbesondere zu einer manuellen Eingabe, einem passiven Empfang und/oder einer aktiven Abfrage des Umgebungsparameters von einer externen Quelle. Beispielsweise ist der Umgebungsparameter als Umgebungstemperatur, als Umgebungsdruck, insbesondere Luftdruck und/oder als von einer externen Strom- und/oder Spannungsquelle lieferbare Versorgungsspannung ausgebildet. Vorzugsweise wird in dem Kompensationsschritt eine maximale Amplitude des Kommutierungssignals an die lieferbare Versorgungsspannung angepasst. Insbesondere wird in dem Kompensationsschritt ein maximaler Sollwert der größten Amplitude des Spannungsabfalls, insbesondere für eine Übermodulation des Kommutierungssignals, an die lieferbare Versorgungsspannung angepasst. Insbesondere wird durch die Anpassung an die lieferbare Versorgungspannung der Startpunkt für die Abweichung von der Stromkennlinie verschoben. Beispielsweise wird in dem Kompensationsschritt eine von mehreren Stromkennlinien anhand einer Umgebungstemperatur ausgewählt. Alternativ oder zusätzlich wird die Stromkennlinie mit einem temperaturabhängigen Korrekturfaktor beaufschlagt. Durch die erfindungsgemäße Ausgestaltung kann die elektrisch kommutierte Maschine bei einer vorteilhaft großen Bandbreite der Umgebungsparameter, insbesondere effizient, betrieben werden. Insbesondere kann ein vollständiger Stopp eines Betriebs der elektrisch kommutierten Maschine aufgrund von Umgebungsparametern außerhalb einer vorgesehen Wertespanne für die elektrisch kommutierte Maschine vorteilhaft lange vermieden werden.

Des Weiteren wird eine elektrisch kommutierte Maschine mit zumindest einer Steuer- oder Regeleinheit zur Durchführung eines erfindungsgemäßen Verfahrens vorgeschlagen. Vorzugsweise umfasst die elektrisch kommutierte Maschine zumindest den einen Stator. Vorzugsweise umfasst der Stator zumindest ein induktives Bauelement. Vorzugsweise ist das induktive Bauelement als Drahtwicklung um ein Strukturelement des Stators ausgebildet. Es ist aber auch denkbar, dass das induktive Bauelement als eigenständiges Spulenelement an dem Stator angeordnet ist. Vorzugweise umfasst der Stator drei und/oder ein Vielfaches von drei an induktiven Bauelementen. Es ist aber auch eine andere Anzahl von induktiven Bauelementen, insbesondere zwei oder eins, denkbar. Vorzugsweise umfassen zumindest zwei, vorzugsweise alle, induktiven Bauelemente zumindest eine gemeinsame Potentialstufe, insbesondere eine gemeinsame Masse. Vorzugsweise sind die induktiven Bauelemente in regelmäßigen Abständen, insbesondere kreisförmig, an dem Stator angeordnet. Vorzugsweise umfasst die elektrisch kommutierte Maschine zumindest eine Schalteinheit, insbesondere eine Transistoreinheit, zu einem Schalten des zumindest einen induktiven Bauelements, insbesondere zu einem Schalten zwischen verschiedenen induktiven Bauelementen. Vorzugsweise ist die Schalteinheit, insbesondere zusätzlich, zu einer Verstärkung eines Kommutierungssignals für das zumindest eine induktive Bauelement vorgesehen. Vorzugsweise ist die Schalteinheit als Brückenschaltung und/oder Halbbrückenschaltung ausgebildet, insbesondere als B6-Brücke und/oder als 2H-Brücke. Vorzugsweise ist die Steuer- oder Regeleinheit dazu vorgesehen, die Schalteinheit zu steuern, insbesondere ein Kommutierungssignal zu erzeugen. Vorzugsweise ist die Steuer- oder Regeleinheit dazu vorgesehen, das Kommutierungssignal mit einer Pulsweitenmodulation zu beaufschlagen. Vorzugsweise umfasst die elektrisch kommutierte Maschine zumindest eine Anschlusseinheit zu einer Stromversorgung und/oder Spannungsversorgung der elektrisch kommutierten Maschine. Es ist auch denkbar, dass die elektrisch kommutierte Maschine eine Strom- und/oder Spannungsquelle, insbesondere eine Batterieeinheit, umfasst. Vorzugsweise umfasst die elektrisch kommutierte Maschine zwischen der Anschlusseinheit, insbesondere der Strom- und/oder Spannungsquelle, und der Schalteinheit zumindest eine Entkopplungseinheit, insbesondere eine Zwischenkreis-Kondensatoreinheit. Vorzugsweise umfasst die elektrisch kommutierte Maschine zumindest den einen Rotor. Vorzugsweise ist der Rotor an dem Stator angeordnet. Vorzugsweise ist der Rotor als Außenläufer, Innenläufer oder Scheibenläufer ausgebildet. Vorzugsweise umfasst der Rotor zumindest ein Magnetelement zur Erzeugung eines magnetischen Moments. Vorzugsweise ist das Magnetelement als Permanentmagnetelement ausgebildet. Es ist aber auch denkbar, dass das Magnetelement als Elektromagnet ausgebildet ist. Es ist denkbar, dass der Rotor mehrere, insbesondere rotationssymmetrisch angeordnete, Magnetelemente aufweist. Vorzugsweise umfasst der Rotor zumindest eine Rotorwelle, zu einer Übertragung eines Drehmoments auf eine Arbeitsmaschine. Vorzugsweise ist die elektrisch kommutierte Maschine bürstenlos ausgebildet. Vorzugsweise umfasst die elektrisch kommutierte Maschine zumindest eine Gehäuseeinheit und/oder eine Abschirmeinheit, insbesondere zu einem Schutz des Rotors und/oder von Elektronikbauteilen der elektrisch kommutierten Maschine. Vorzugsweise umfasst die elektrisch kommutierte Maschine zumindest eine Speichereinheit zu einem Speichern der Stromkennlinie. Es ist denkbar, dass die Speichereinheit in die Steuer- oder Regeleinheit integriert ist. Durch die erfindungsgemäße Ausgestaltung kann eine elektrisch kommutierte Maschine mit einem vorteilhaft definierten und/oder einstellbaren Wirkungsgrad zur Verfügung gestellt werden.

den.

Darüber hinaus wird eine Kühlvorrichtung zur Umwälzung eines Kühlungsfluids, insbesondere zur Kühlung eines Fahrzeugmotors, mit zumindest einem Förderelement zur Förderung des Kühlungsfluids, insbesondere Luft, und mit zumindest einer erfindungsgemäßen elektrisch kommutierten Maschine zu einem Antrieb des Förderelements vorgeschlagen. Vorzugsweise ist die Kühlvorrichtung zur Kühlung eines Raums und/oder eines Objekts, insbesondere einer wärmeerzeugenden Maschine, bevorzugt eines Motors, vorgesehen. Vorzugsweise ist das Förderelement als Ventilatorelement, als Propellerelement, als Verdichterelement, als Pumpenelement o.dgl. ausgebildet. Insbesondere weist das Förderelement ein mit der Drehzahl des Förderelements monoton, insbesondere quadratisch, ansteigendes Lastmoment auf. Vorzugsweise ist das Förderelement mit der Rotorwelle des Rotors der elektrisch kommutierten Maschine direkt, insbesondere drehfest, oder indirekt über eine Getriebeeinheit verbunden. Vorzugsweise weist die Kühlvorrichtung in dem Übermodulationsbetrieb zumindest einen stabilen Arbeitspunkt auf. Insbesondere weist die Kühlvorrichtung in dem Übermodulationsbetrieb bei einem Standarddruck, bei einer Standardtemperatur, bei einer Standardspannungsversorgung und/oder bei einer Standarddrehzahl den zumindest einen stabilen Arbeitspunkt auf. Vorzugsweise ist der Standarddruck als Druck des Kühlungsfluids, insbesondere als atmosphärischer Luftdruck, innerhalb einer Wertespanne um 1013 mbar ausgebildet, wobei eine Intervallbreite zumindest 100 mbar, bevorzugt zumindest 300 mbar, besonders bevorzugt zumindest 500 mbar, umfasst. Vorzugsweise ist die Standardtemperatur als eine Betriebstemperatur der elektrisch kommutierten Maschine, insbesondere bei einem Betrieb innerhalb eines Motorraums, innerhalb einer Wertespanne um 110°C ausgebildet, wobei eine Intervallbreite zumindest 10 K, bevorzugt zumindest 20 K, besonders bevorzugt zumindest 30 K, umfasst. Vorzugsweise ist eine Standarddrehzahl als Drehzahl des Rotors innerhalb einer Wertespanne um die Nenndrehzahl ausgebildet, wobei eine Intervallbreite zumindest 1 %, bevorzugt zumindest 5 %, besonders bevorzugt zumindest 10 %, der Nenndrehzahl umfasst. Vorzugsweise ist eine Standardversorgungspannung als Versorgungspannung eines Bordnetzteils innerhalb einer Wertespanne um 13 V ausgebildet, wobei eine Intervallbreite zumindest 1 V, bevorzugt zumindest 3 V, besonders bevorzugt zumindest 5°V, umfasst. Durch die erfindungsgemäße Ausgestaltung kann eine Kühlvorrichtung mit einem vorteilhaft definierten und/oder einstellbaren Wirkungsgrad zur Verfügung gestellt werden. Insbesondere kann eine Kühlvorrichtung zur Verfügung gestellt werden die, insbesondere unter Standardbedingungen, in dem Übermodulationsbetrieb arbeitet. Insbesondere kann eine Kühlvorrichtung zur Verfügung gestellt werden, die vorteilhaft flexibel durch einen Wechsel in den Regulärbetrieb und/oder den Feldschwächungsbetrieb auf eine Abweichung von Standardbedingungen reagieren kann.

Das erfindungsgemäße Verfahren, die erfindungsgemäße elektrisch kommutierte Maschine und/oder die erfindungsgemäße Kühlvorrichtung sollen/soll hierbei nicht auf die oben beschriebene Anwendung und Ausführungsform beschränkt sein. Insbesondere können/kann das erfindungsgemäße Verfahren, die erfindungsgemäße elektrisch kommutierte Maschine und/oder die erfindungsgemäße Kühlvorrichtung zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1    eine schematische Darstellung einer erfindungsgemäßen Kühlvorrichtung,

Fig. 2    eine schematische Darstellung der erfindungsgemäßen elektrisch kommutierten Maschine,

Fig. 3    ein Flussdiagramm eines erfindungsgemäßen Verfahrens in einer schematischen Darstellung und

Fig. 4    eine Stromkennlinie des erfindungsgemäßen Verfahrens.

Beschreibung des Ausführungsbeispiels

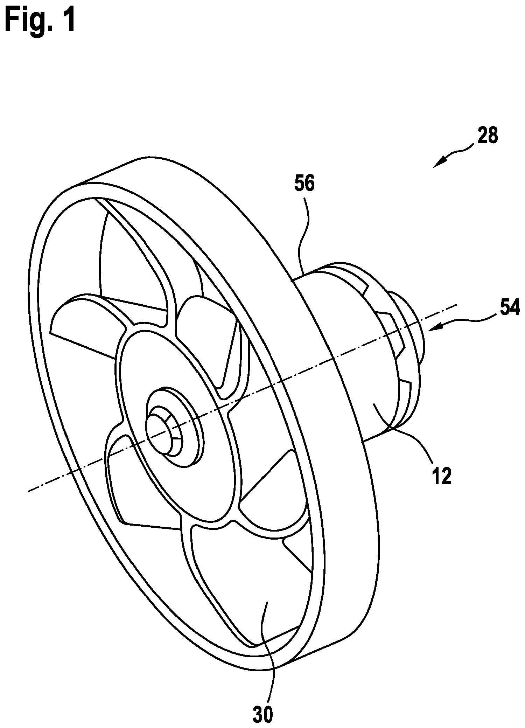

Figur 1 zeigt eine Kühlvorrichtung 28. Die Kühlvorrichtung 28 ist zur Umwälzung eines Kühlungsfluids, insbesondere zur Kühlung eines Fahrzeugmotors vorgesehen. Die Kühlvorrichtung 28 umfasst zumindest ein Förderelement 30. Das Förderelement 30 ist zur Förderung des Kühlungsfluids, insbesondere Luft, vorgesehen. Die Kühlvorrichtung 28 umfasst zumindest eine elektrisch kommutierte Maschine 12. Die elektrisch kommutierte Maschine 12 ist zu einem Antrieb des Förderelements 30 vorgesehen. Vorzugsweise ist das Förderelement 30 als Ventilatorelement ausgebildet. Es ist denkbar, dass die Kühlvorrichtung 28 eine Halteeinheit zu einer Montage an einem Einsatzort, insbesondere in einem Fahrzeugmotorraum aufweist.

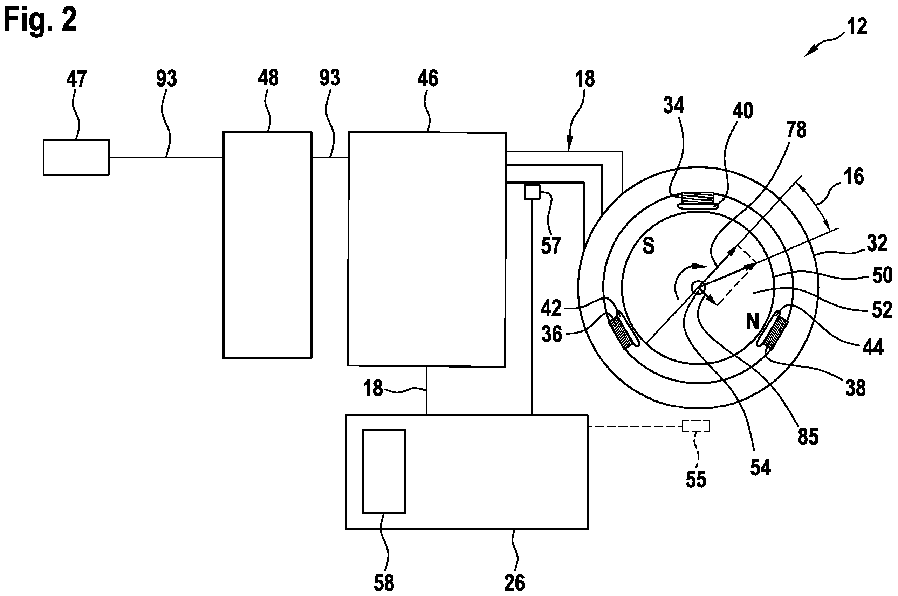

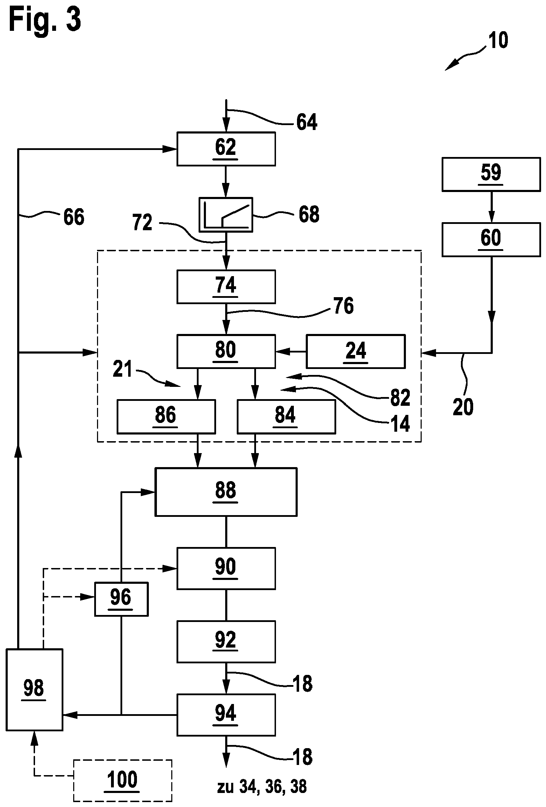

Figur 2 zeigt die elektrische kommutierte Maschine 12. Die elektrisch kommutierte Maschine 12 umfasst zumindest eine Steuer- oder Regeleinheit 26. Die Steuer- oder Regeleinheit 26 ist zur Durchführung eines Verfahrens 10 vorgesehen (siehe Figur 3). Vorzugsweise umfasst die elektrisch kommutierte Maschine 12 zumindest den einen Stator 32. Vorzugsweise umfasst der Stator 32 zumindest ein induktives Bauelement 34, 36, 38. Vorzugsweise ist das induktive Bauelement 34, 36, 38 als Drahtwicklung um ein Strukturelement 40, 42, 44 des Stators 32 ausgebildet. Vorzugweise umfasst der Stator 32 drei induktive Bauelemente 34, 36, 38. Vorzugsweise umfassen zumindest zwei, vorzugsweise alle, induktiven Bauelemente 34, 36, 38 zumindest eine gemeinsame Potentialstufe, insbesondere eine gemeinsame Masse. Vorzugsweise sind die induktiven Bauelemente 34, 36, 38 in regelmäßigen Abständen, insbesondere kreisförmig, an dem Stator 32 angeordnet.

Vorzugsweise umfasst die elektrisch kommutierte Maschine 12 zumindest eine Schalteinheit 46, insbesondere eine Transistoreinheit, zu einem Schalten des zumindest einen induktiven Bauelements 34, 36, 38. Vorzugsweise ist die Schalteinheit 46, insbesondere zusätzlich, zu einer Verstärkung eines Kommutierungssignals 18 für das zumindest eine induktive Bauelement 34, 36, 38 vorgesehen. Vorzugsweise ist die Schalteinheit 46 als Brückenschaltung und/oder Halbbrückenschaltung ausgebildet, insbesondere als B6-Brücke und/oder als 2H-Brücke. Vorzugsweise ist die Steuer- oder Regeleinheit 26 dazu vorgesehen, die Schalteinheit 46 zu steuern, insbesondere das Kommutierungssignal 18 zu erzeugen. Vorzugsweise ist die Steuer- oder Regeleinheit 26 dazu vorgesehen, das Kommutierungssignal 18 mit einer Pulsweitenmodulation zu beaufschlagen. Vorzugsweise umfasst die elektrisch kommutierte Maschine 12 zumindest eine Anschlusseinheit 47 zu einer Stromversorgung und/oder Spannungsversorgung der elektrisch kommutierten Maschine 12. Vorzugsweise umfasst die elektrisch kommutierte Maschine 12 zwischen der Anschlusseinheit 47 und der Schalteinheit 46 zumindest eine Entkopplungseinheit 48, insbesondere eine Zwischenkreis- Kondensatoreinheit.

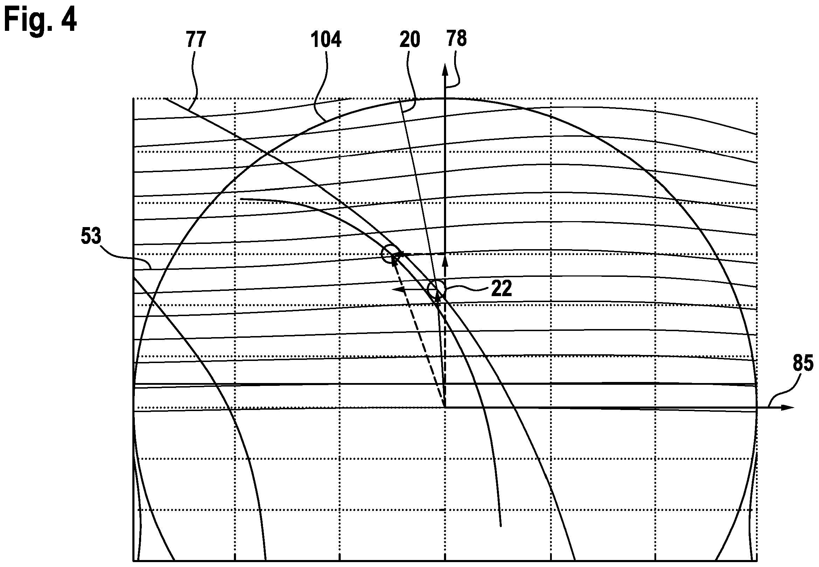

Vorzugsweise umfasst die elektrisch kommutierte Maschine 12 zumindest den einen Rotor 50. Vorzugsweise ist der Rotor 50 an dem Stator 32 angeordnet. Vorzugsweise ist der Rotor 50 als Innenläufer ausgebildet. Vorzugsweise umfasst der Rotor 50 zumindest ein Magnetelement 52 zur Erzeugung eines magnetischen Moments. Vorzugsweise ist das Magnetelement 52 als Permanentmagnetelement ausgebildet. Vorzugsweise umfasst der Rotor 50 zumindest eine Rotorwelle 54 zu einer Übertragung eines Drehmoments 53 auf das Förderelement 30. Vorzugsweise ist die elektrisch kommutierte Maschine 12 bürstenlos ausgebildet. Vorzugsweise umfasst die elektrisch kommutierte Maschine 12 zumindest eine Gehäuseeinheit 56, insbesondere zu einem Schutz des Rotors 50 und/oder von Elektronikbauteilen der elektrisch kommutierten Maschine 12 (vgl. Figur 1). Vorzugsweise umfasst die elektrisch kommutierte Maschine 12 zumindest eine Speichereinheit 58 zu einem Speichern einer Stromkennlinie 20 (vgl. Fig. 4). Vorzugsweise umfasst die elektrisch kommutierte Maschine 12 zumindest ein Sensorelement 57 zu einer Erfassung des, insbesondere verstärkten und/oder modulierten, Kommutierungssignals 18. Es ist auch denkbar, dass die elektrisch kommutierte Maschine 12 zumindest einen Lagegeber 55 zu einer Erfassung einer aktuellen Position und/oder Geschwindigkeit des Rotors 50 umfasst.

Figur 3 zeigt das Verfahren 10. Das Verfahren 10 ist zum Betrieb der elektrisch kommutierten Maschine 12 vorgesehen. In zumindest einem Verfahrensschritt, insbesondere in zumindest einem Verfahrensschritt eines Übermodulationsbetriebs 14 der elektrisch kommutierten Maschine 12, wird ein Vorkommutierungswinkel 16 der elektrisch kommutierten Maschine 12 in Abhängigkeit von einem Wirkungsgrad der elektrisch kommutierten Maschine 12 eingestellt. Insbesondere wird in zumindest einem Modellierungsschritt 59, insbesondere während einer Vorbereitungsphase des Verfahrens 10, ein mathematisches Modell der elektrisch kommutierten Maschine 12, insbesondere mittels einer externen Rechneinheit, erstellt. Insbesondere wird in dem Modellierungsschritt 59, insbesondere während der Vorbereitungsphase des Verfahrens 10, zumindest ein Maschinenparameter erfasst und/oder ermittelt. Vorzugsweise werden die Maschinenparameter, insbesondere während der Vorbereitungsphase des Verfahrens 10, bei einer Betriebstemperatur der elektrisch kommutierten Maschine 12, insbesondere bei einer typischen Umgebungstemperatur eines Einsatzortes der elektrisch kommutierten Maschine 12, erfasst. Alternativ oder zusätzlich wird bei einer Ermittlung des zumindest einen Maschinenparameters der zumindest eine Maschinenparameter mit einem temperaturabhängigen Korrekturwert beaufschlagt. In einem Kennlinienermittlungsschritt 60, insbesondere während einer Vorbereitungsphase des Verfahrens 10, wird die Stromkennlinie 20 mit Hilfe des mathematischen Modells der elektrisch kommutierten Maschine 12, insbesondere mittels der externen Rechneinheit, ermittelt. In dem Kennlinienermittlungsschritt 60, insbesondere während der Vorbereitungsphase des Verfahrens 10, wird zumindest die Stromkennlinie 20 der elektrisch kommutierten Maschine 12 zur Einstellung des Vorkommutierungswinkels 16 bei zumindest einer Betriebstemperatur der elektrisch kommutierten Maschine 12 ermittelt. Insbesondere wird in dem Kennlinienermittlungsschritt 60, insbesondere während der Vorbereitungsphase des Verfahrens 10, die Stromkennlinie 20 in der Speichereinheit 58 hinterlegt. Es ist auch denkbar, dass das Modell der elektrisch kommutierten Maschine 12 in der Speichereinheit 58 hinterlegt wird. Vorzugsweise wird die Stromkennlinie 20 bei einer Montage der elektrisch kommutierten Maschine 12 und/oder bei einem Einbau der elektrisch kommutierten Maschine 12, insbesondere der Kühlvorrichtung 28, in der Speichereinheit 58 hinterlegt. Es ist auch denkbar, dass die Stromkennlinie 20 beispielsweise im Zuge von Wartungsarbeiten, insbesondere in einem eingebauten Zustand der elektrisch kommutierten Maschine 12, insbesondere der Kühlvorrichtung 28, aktualisiert wird.

Vorzugsweise wird zu einer Drehzahlregelung 62 des Verfahrens 10 eine Solldrehzahl 64 vorgegeben. Beispielsweise wird die Solldrehzahl 64 von einem Benutzer vorgegeben und/oder von einer externen Quelle empfangen und/oder abgefragt. Vorzugsweise wird in einem Drehzahlverarbeitungsschritt 68 eine Abweichung von einer Istdrehzahl 66, beispielsweise mittels eines PI-Regelglieds der Steuer- oder Regeleinheit 26, zu einem Solldrehmoment 72 verarbeitet. Vorzugsweise wird, insbesondere von der Steuer- oder Regeleinheit 26, in einem Drehmomentverarbeitungsschritt 74 aus dem Solldrehmoment 72 ein Stromsollwert 76 für einen als Querstrom 78 ausgebildeten Teilstromfluss eines gesamten Stromflusses durch den Stator 32 und/oder für den Betrag des gesamten Stromflusses durch den Stator 32 ermittelt. Insbesondere ist ein maximal erreichbarer Maximalstrom 77 durch eine, insbesondere betriebsparameterabhängige, Spannungsgrenze vorgegeben. Vorzugsweise wird, insbesondere von der Steuer- oder Regeleinheit 26, in einem Betriebsermittlungsschritt 80 der Stromsollwert 76 mit dem Maximalstrom 77 verglichen. Insbesondere markiert ein Schnittpunkt des Maximalstroms 77 mit der Stromkennlinie 20 einen Startpunkt 22 einer Abweichung von der Stromkennlinie 20 zur Einstellung des Vorkommutierungswinkels 16. In dem Betriebsermittlungsschritt 80 wird der Startpunkt 22 (vgl. Fig.4) einer Abweichung von der Stromkennlinie 20 der elektrisch kommutierten Maschine 12 zur Einstellung des Vorkommutierungswinkels 16 abhängig von zumindest einem Betriebsparameter der elektrisch kommutierten Maschine 12 bestimmt. Insbesondere wird, insbesondere von der Steuer- oder Regeleinheit 26, der Startpunkt 22 abhängig von der Drehzahl bestimmt. Insbesondere wird, insbesondere von der Steuer- oder Regeleinheit 26, der Startpunkt 22 abhängig von der Betriebstemperatur bestimmt. Das Verfahren 10 umfasst zumindest einen Kompensationsschritt 24 zu einer Anpassung des Vorkommutierungswinkels 16 an einen Umgebungsparameter. Vorzugsweise wird der Umgebungsparameter in dem Kompensationsschritt 24 erfasst und/oder von einer externen Quelle abgefragt und/oder empfangen. Insbesondere wird, insbesondere von der Steuer- oder Regeleinheit 26, in dem Kompensationsschritt 24 ein Korrekturwert für den Startpunkt 22 ermittelt. Insbesondere wird, insbesondere von der Steuer- oder Regeleinheit 26, der Korrekturwert abhängig von einem als Versorgungsspannung 93 ausgebildeten Umgebungsparameter ermittelt.

Vorzugsweise wird in dem Betriebsermittlungsschritt 80, insbesondere von der Steuer- oder Regeleinheit 26, bei einem Unterschreiten des Maximalstroms 77 durch den Stromsollwert 76 ein Regulärbetrieb 82 aktiviert. Vorzugsweise wird in dem Betriebsermittlungsschritt 80, insbesondere von der Steuer- oder Regeleinheit 26, bei einem Überschreiten des Maximalstroms 77 durch den Stromsollwert 76 um weniger als einen Modulationstoleranzwert der Übermodulationsbetrieb 14 aktiviert. Vorzugsweise beträgt der Modulationstoleranzwert für den Stromsollwert mehr als 1,5 %, bevorzugt mehr als 3 %, besonders bevorzugt mehr als 4,5 %, des Maximalstroms 77. Vorzugsweise beträgt der Modulationstoleranzwert für den Stromsollwert weniger als 10 %, bevorzugt weniger als 8,5 %, besonders bevorzugt weniger als 6,5 %, des Maximalstroms 77. Vorzugsweise wird, insbesondere von der Steuer- oder Regeleinheit 26, in einem Längsstromermittlungsschritt 84, insbesondere in dem Regulärbetrieb 82 und/oder in dem Übermodulationsbetrieb 14, ein Sollwert für einen als Längsstrom 85 ausgebildeten Teilstromfluss des gesamten Stromflusses anhand der Stromkennlinie 20 ermittelt. In dem Längsstromermittlungsschritt 84 wird der Vorkommutierungswinkel 16 anhand zumindest der kontinuierlichen Stromkennlinie 20 der elektrisch kommutierten Maschine 12 eingestellt. Insbesondere wird, insbesondere von der Steuer- oder Regeleinheit 26, in dem Längsstromermittlungsschritt 84 ein Sollwert für den Längsstrom 85 in Abhängigkeit von dem Stromsollwert 76 ermittelt. In dem Längsstromermittlungsschritt 84 wird der Vorkommutierungswinkel 16 auf einen Wert eingestellt, der bei einem gegebenen Betriebszustand einen höchsten Wirkungsgrad erzielt. Vorzugsweise wird, insbesondere von der Steuer- oder Regeleinheit 26, in dem Übermodulationsbetrieb 14 der elektrisch kommutierten Maschine 12, der Stromsollwert 76 höher gewählt als der Maximalstrom 77, insbesondere zu einer Übermodulation des Kommutierungssignals 18, insbesondere zu einer Erhöhung eines Effektivwerts des Stromflusses durch den Stator 32.

Vorzugsweise wird in dem Betriebsermittlungsschritt 80, insbesondere von der Steuer- oder Regeleinheit 26, bei einem Überschreiten des Maximalstroms 77 durch den Stromsollwert 76, insbesondere um mehr als den Modulationstoleranzwert für den Stromsollwert, ein Feldschwächungsbetrieb 21 aktiviert. In einem Längsstromanpassungsschritt 86 des Feldschwächungsbetriebs 21 wird ein wirkungsgradabhängiges Einstellen des Vorkommutierungswinkels 16 deaktiviert. Vorzugsweise wird, insbesondere von der Steuer- oder Regeleinheit 26, in dem Längsstromanpassungsschritt 86 in dem Feldschwächungsbetrieb 21 der Sollwert für den als Längsstrom 85 ausgebildeten Teilstromfluss des gesamten Stromflusses in Abhängigkeit von dem Solldrehmoment 72 erhöht und/oder verringert.

Vorzugsweise werden der Sollwert für den Längsstrom 85 und der Sollwert für den Querstrom 78 an eine Stromregelung 88 übergeben. Vorzugsweise werden die Sollwerte für den Längsstrom 85 und den Querstrom 78 in einem Transformationsschritt 90 in Sollwerte für als Phasenströme ausgebildete Teilströme des gesamten Stromflusses durch die einzelnen induktiven Bauelemente 34, 36, 38 übersetzt, insbesondere unter Einbezug einer aktuellen Position des Rotors 50. Vorzugsweise wird in einem Umwandlerschritt 92, insbesondere mittels der Steuer- oder Regeleinheit 26, anhand der Sollwerte für die als Phasenströme ausgebildeten Teilströme des gesamten Stromflusses durch die einzelnen induktiven Bauelemente 34, 36, 38 zumindest das Kommutierungssignal 18 ausgegeben. Vorzugsweise wird das Kommutierungssignal 18, insbesondere von der Steuer- oder Regeleinheit 26, in dem Umwandlerschritt 92 mit einer Pulsweitenmodulation beaufschlagt. In dem Umwandlerschritt 92 wird in dem Übermodulationsbetrieb 14 der elektrisch kommutierten Maschine 12 zumindest das Kommutierungssignal 18 der elektrisch kommutierten Maschine 12 übermoduliert. Insbesondere wird die Schalteinheit 46 durch das Kommutierungssignal 18 in dem Übermodulationsbetrieb 14 übersteuert. Insbesondere werden die Extrema des, insbesondere verstärkten und/oder modulierten, Kommutierungssignals 18 in dem Übermodulationsbetrieb 14 durch die Schalteinheit 46 abgeschnitten. Insbesondere wird in dem Übermodulationsbetrieb 14 eine Zeitdauer, in welcher das verstärkte und/oder modulierte Kommutierungssignal 18 einen Extremalwert annimmt, relativ zu einer entsprechenden Zeitdauer in dem Regulärbetrieb 82 erhöht.

Vorzugsweise wird das, insbesondere modulierte, Kommutierungssignal 18 mittels der Schalteinheit 46 und der Versorgungsspannung 93 verstärkt. Insbesondere werden die induktiven Bauelemente 34, 36, 38 von dem, insbesondere verstärkten und/oder modulierten, Kommutierungssignal 18 angesteuert. Vorzugsweise wird in einem Stromerfassungsschritt 94 das, insbesondere verstärkte und/oder modulierte, Kommutierungssignal 18, insbesondere als Phasenströme, erfasst. Vorzugsweise wird das erfasste, insbesondere verstärkte und/oder modulierte, Kommutierungssignal 18, insbesondere in der Form von Phasenströmen, zu der Stromregelung 88 rückgekoppelt. Insbesondere wird das erfasste, insbesondere verstärkte und/oder modulierte, Kommutierungssignal 18, insbesondere in der Form von Phasenströmen, in einem Rücktransformationsschritt 96 vor der Stromregelung 88 in einen Wert für den Querstrom 78 und den Längsstrom 85 umgerechnet, insbesondere unter Einbezug einer aktuellen Position des Rotors 50. Vorzugsweise werden/wird in einer Lageermittlung 98 eine aktuelle Position und/oder eine aktuelle Geschwindigkeit, insbesondere die Drehzahl des Rotors 50, ermittelt. Es ist denkbar, dass in zumindest einem Lageerfassungsschritt 100 eine positions- und/oder geschwindigkeitsabhängige Kenngröße, insbesondere mittels des Lagegebers 55, erfasst wird. Vorzugsweise wird zur Lageermittlung 98 ein in den induktiven Bauelementen 34, 36, 38 induziertes Signal ausgewertet. Insbesondere wird das induzierte Signal gemeinsam mit dem, insbesondere verstärkten und/oder modulierten, Kommutierungssignal 18, insbesondere mittels des Sensorelements 57, erfasst.

Figur 4 zeigt ein Stromdiagramm 102. In dem Stromdiagramm 102 ist der Querstrom 78 gegen den Längsstrom 85 aufgetragen. In dem Stromdiagramm 102 sind Linien konstanten Drehmoments 53 aufgetragen. In dem Stromdiagramm 102 ist eine Stromgrenze 104 aufgetragen. In dem Stromdiagramm 102 ist der Maximalstrom 77 für zumindest einen Betriebszustand aufgetragen. Vorzugsweise beschreibt die Stromkennlinie 20 ein Verhältnis zwischen dem Längsstrom 85 und dem Querstrom 78. Vorzugsweise ordnet die Stromkennlinie 20 jedem Querstrom 78 einen Längsstrom 85 zu. Vorzugsweise ordnet die Stromkennlinie 20 jedem Querstrom 78 einen Längsstrom 85 mit einem festgelegten Wirkungsgrad zu. Vorzugsweise wird in dem Kennlinienermittlungsschritt 60 zu jedem, insbesondere durch einen Betriebszustand vorgegebenen, Querstrom 78 derjenige Längsstrom 85 ermittelt, der zusammen mit dem Querstrom 78 den höchsten Wirkungsgrad erzielt. Vorzugsweise wird die Stromkennlinie 20 zumindest durch die Stromgrenze 104 begrenzt. Vorzugsweise ist die Stromgrenze 104 durch eine Stromversorgung und/oder ein Strombegrenzungselement, insbesondere ein Sicherungselement, der elektrisch kommutierten Maschine 12 gegeben. Vorzugsweise wird die Stromkennlinie 20 in einem Betrieb der elektrisch kommutierten Maschine 12 durch den Maximalstrom 77 begrenzt. Vorzugsweise wird der Maximalstrom 77 durch eine Spannungsversorgung und/oder ein Spannungsbegrenzungselement, insbesondere ein Sicherungselement, der elektrisch kommutierten Maschine 12 begrenzt. Insbesondere wird der Maximalstrom 77 durch ein, insbesondere drehzahlabhängiges, induziertes Signal begrenzt. Insbesondere wird der Maximalstrom 77 durch eine Impedanz, insbesondere einen temperaturabhängigen elektrischen Widerstand, des Stators 32 begrenzt. Vorzugsweise gibt der Schnittpunkt des Maximalstroms 77 mit der Stromkennlinie 20 den Startpunkt 22 vor. Insbesondere markiert der Startpunkt 22 einen Übergang von dem Regulärbetrieb 82 und/oder dem Übermodulationsbetrieb 14 in den Feldschwächungsbetrieb 21.

**Patentansprüche**

1. Verfahren zum Betrieb einer elektrisch kommutierten Maschine, **dadurch gekennzeichnet, dass** in zumindest einem Verfahrensschritt eines Übermodulationsbetriebs (14) der elektrisch kommutierten Maschine, ein Vorkommutierungswinkel (16) der elektrisch kommutierten Maschine in Abhängigkeit von einem Wirkungsgrad der elektrisch kommutierten Maschine und anhand zumindest einer kontinuierlichen Stromkennlinie (20) der elektrisch kommutierten Maschine eingestellt wird.

2. Verfahren nach Anspruch 1, **dadurch gekennzeichnet, dass** in zumindest einem Verfahrensschritt, insbesondere in zumindest einem Verfahrensschritt eines Übermodulationsbetriebs (14) der elektrisch kommutierten Maschine, zumindest ein Kommutierungssignal (18) der elektrisch kommutierten Maschine übermoduliert wird.

3. Verfahren nach einem der vorhergehenden Ansprüche, **dadurch gekennzeichnet, dass** in zumindest einem Verfahrensschritt zumindest eine Stromkennlinie (20) der elektrisch kommutierten Maschine zur Einstellung des Vorkommutierungswinkels (16) bei zumindest einer Betriebstemperatur der elektrisch kommutierten Maschine ermittelt wird.

4. Verfahren nach einem der vorhergehenden Ansprüche, **dadurch gekennzeichnet, dass** in zumindest einem Verfahrensschritt, insbesondere in zumindest einem Verfahrensschritt eines Übermodulationsbetriebs (14) der elektrisch kommutierten Maschine, der Vorkommutierungswinkel (16) auf einen Wert eingestellt wird, der bei einem gegebenen Betriebszustand einen höchsten Wirkungsgrad erzielt.

5. Verfahren nach einem der vorhergehenden Ansprüche, **dadurch gekennzeichnet, dass** in zumindest einem Verfahrensschritt, insbesondere in einem Verfahrensschritt eines Feldschwächungsbetriebs (21) der elektrisch kommutierten Maschine, ein wirkungsgradabhängiges Einstellen des Vorkommutierungswinkels (16) deaktiviert wird.

6. Verfahren nach einem der vorhergehenden Ansprüche, **dadurch gekennzeichnet, dass** in zumindest einem Verfahrensschritt ein Startpunkt (22) einer Abweichung von einer Stromkennlinie (20) der elektrisch kommutierten Maschine zur Einstellung des Vorkommutierungswinkels (16) abhängig von zumindest einem Betriebsparameter der elektrisch kommutierten Maschine bestimmt wird.

7. Verfahren nach einem der vorhergehenden Ansprüche, **gekennzeichnet durch** zumindest einen Kompensationsschritt (24) zu einer Anpassung des Vorkommutierungswinkels (16) an einen Umgebungsparameter.

8. Elektrisch kommutierte Maschine mit zumindest einer Steuer- oder Regeleinheit (26) zur Durchführung eines Verfahrens nach einem der Ansprüche 1 bis 7.

9. Kühlvorrichtung zur Umwälzung eines Kühlungsfluids, insbesondere zur Kühlung eines Fahrzeugmotors, mit zumindest einem Förderelement (30) zur Förderung des Kühlungsfluids, insbesondere Luft, und mit zumindest einer elektrisch kommutierten Maschine nach Anspruch 8 zu einem Antrieb des Förderelements.

**Claims**

1. Method for operating an electrically commutated machine, **characterized in that** in at least one method step of an overmodulation operation (14) of the electrically commutated machine a precommutation angle (16) of the electrically commutated machine is set depending on an efficiency of the electrically commutated machine and on the basis of at least one continuous current characteristic curve (20) of the electrically commutated machine.

2. Method according to Claim 1, **characterized in that** in at least one method step, in particular in at least one method step of overmodulation operation (14) of the electrically commutated machine, at least one commutation signal (18) of the electrically commutated machine is overmodulated.

3. Method according to either of the preceding claims, **characterized in that** in at least one method step at least one current characteristic curve (20) of the electrically commutated machine is ascertained for setting the precommutation angle (16) at at least one operating temperature of the electrically commutated machine.

4. Method according to one of the preceding claims, **characterized in that** in at least one method step, in particular in at least one method step of overmodulation operation (14) of the electrically commutated machine, the precommutation angle (16) is set to a value which achieves a maximum efficiency for a given operating state.

5. Method according to one of the preceding claims, **characterized in that** in at least one method step, in particular in a method step of field-weakening operation (21) of the electrically commutated machine, efficiency-dependent setting of the precommutation angle (16) is deactivated.

6. Method according to one of the preceding claims, **characterized in that** in at least one method step a starting point (22) of a deviation from a current characteristic curve (20) of the electrically commutated machine is determined for setting the precommutation angle (16) depending on at least one operating parameter of the electrically commutated machine.

7. Method according to one of the preceding claims, **characterized by** at least one compensation step (24) for adapting the precommutation angle (16) to an ambient parameter.

8. Electrically commutated machine comprising at least one open-loop or closed-loop control unit (26) for carrying out a method according to one of Claims 1 to 7.

9. Cooling device for circulating a cooling fluid, in particular for cooling a vehicle motor, comprising at least one conveying element (30) for conveying the cooling fluid, in particular air, and comprising at least one electrically commutated machine according to Claim 8 for driving the conveying element.

**Revendications**

1. Procédé de fonctionnement d'une machine à commutation électrique, **caractérisé en ce que**, dans au moins une étape de procédé lorsque la machine à commutation électrique fonctionne en mode de sur-modulation (14), un angle de pré-commutation (16) de la machine à commutation électrique est réglé en fonction d'un rendement de la machine à commutation électrique et sur la base d'au moins une caractéristique de courant continu (20) de la machine à commutation électrique.

2. Procédé selon la revendication 1, **caractérisé en ce que**, dans au moins une étape de procédé, notamment dans au moins une étape de procédé lorsque la machine à commutation électrique fonctionne en mode de sur-modulation (14), au moins un signal de commutation (18) de la machine à commutation électrique est surmodulé.

3. Procédé selon l'une des revendications précédentes, **caractérisé en ce que**, dans au moins une étape de procédé, au moins une caractéristique de courant (20) de la machine à commutation électrique est déterminée à au moins une température de fonctionnement de la machine à commutation électrique afin de régler l'angle de pré-commutation (16).

4. Procédé selon l'une des revendications précédentes, **caractérisé en ce que**, dans au moins une étape de procédé, notamment dans au moins une étape de procédé lorsque la machine à commutation électrique fonctionne en mode de sur-modulation (14), l'angle de pré-commutation (16) est réglé à une valeur qui, dans un état de fonctionnement donné, atteint le rendement le plus élevé.

5. Procédé selon l'une des revendications précédentes, **caractérisé en ce que**, dans au moins une étape de procédé, en particulier dans une étape de procédé lorsque la machine à commutation électrique fonctionne en mode d'affaiblissement de champ (21), un réglage de l'angle de pré-commutation (16), dépendant du rendement, est désactivé.

6. Procédé selon l'une des revendications précédentes, **caractérisé en ce que**, dans au moins une étape de procédé, un point de départ (22) d'un écart par rapport à une caractéristique de courant (20) de la machine à commutation électrique est déterminé en fonction d'au moins un paramètre de fonctionnement de la machine à commutation électrique afin de régler l'angle de pré-commutation (16).

7. Procédé selon l'une des revendications précédentes, **caractérisé par** au moins une étape de compensation (24) destinée à adapter l'angle de pré-commutation (16) à un paramètre d'environnement.

8. Machine à commutation électrique comprenant au moins une unité de commande ou de régulation (26) destinée à mettre en œuvre un procédé selon l'une des revendications 1 à 7.

9. Dispositif de refroidissement destiné à la circulation d'un fluide de refroidissement, notamment au refroidissement d'un moteur de véhicule, ledit dispositif comprenant au moins un élément de transport (30) destiné à transporter le fluide de refroidissement, notamment de l'air, et au moins une machine à commutation électrique selon la revendication 8 destinée à entraîner l'élément de transport.

# Fig. 1

Fig. 2

EP 3 598 631 B1

# Fig. 3

zu 34, 36, 38

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015213565 A1